(19) **Europäisches Patentamt / European Patent Office / Office européen des brevets**

(11) **EP 4 102 695 A1**

(12) # EUROPEAN PATENT APPLICATION

(43) Date of publication:
**14.12.2022 Bulletin 2022/50**

(21) Application number: **21382513.6**

(22) Date of filing: **10.06.2021**

(51) International Patent Classification (IPC):
**H02K 35/02** $^{(2006.01)}$

(52) Cooperative Patent Classification (CPC):
**H02K 35/02;** H02K 2213/03

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Universitat Politècnica De Catalunya**
**08034 Barcelona (ES)**

(72) Inventors:
• **ORDOÑEZ IZQUIERDO, Victor Hugo**
  **08020 Barcelona (ES)**
• **ARCOS VILLAMARIN, Robert**
  **08222 Terrassa (ES)**
• **ROMEU GARBI, Jordi**
  **08222 Terrassa (ES)**

(74) Representative: **Segui Quetglas, Margalida et al**
**Torner, Juncosa i Associats, S.L.**
**C/Pau Claris, 108, 1r 1a**
**08009 Barcelona (ES)**

(54) **ELECTROMAGNETIC VIBRATION ENERGY HARVESTER**

(57) An electromagnetic vibration energy harvester is disclosed. It comprises an electromagnetic transducer that includes a coil that is disposed in an interior space of the electromagnetic transducer and centered along a central axis; a magnetic assembly concentrically disposed surrounding the coil, and including a plurality of magnets forming a Halbach array to concentrate a magnetic field in the interior space of the electromagnetic transducer; and a resonant assembly configured to oscillate in a same direction of the central axis and at a given resonance frequency.

**Fig. 6**

EP 4 102 695 A1

**Description**

Technical Field

The present invention is directed to electromagnetic vibration energy harvester devices.

Background of the Invention

Vibration energy harvesting (VEH) is a modern technology that has received special attention in the last years from the research community and different industries as an outstanding alternative and solution to the inconvenient usage of cables and batteries for powering ultra-low-power devices, especially for wireless sensor networks (WSNs) which are usually located in remote or harsh environments. Harvesting kinetic energy from vibrations and transforming it into electrical energy using an electromagnetic, piezoelectric, or electrostatic transducer mechanism results advantageous because vibrations are abundant in natural and built environments such as industrial facilities and civil infrastructures as, for example, buildings, bridges, roads, airports, water plants, and railway systems, among others.

Electromagnetic transducers have started to be widely applied in the VEH research field and different industrial applications have rapidly arisen, mainly because of their simple configuration and implementation, higher power conversion efficiency, lower output impedance, and cost. Even though they are bulky and difficult to reduce for microelectromechanical systems (MEMS), this is not considered a disadvantage depending on the target application. An electromagnetic vibration energy harvester (EMVEH) is usually integrated by a mechanical subsystem and an electromagnetic subsystem. In the simplest configuration, the mechanical subsystem is designed to represent a single-degree-of-freedom (SDOF) system with base excitation, in which the relative vertical motion of the resonant mass m with respect to the transducer's housing is represented by $z(t) = x(t) - y(t)$, where $x(t)$ and $y(t)$ represent the vertical displacement of the mass and the housing, respectively. The electromagnetic subsystem is designed on the basis of Faraday's law of electromagnetic induction to transform the kinematic energy of the mechanical subsystem vibration into electrical energy. Modeling strategies of both subsystems are well established and were documented by several researchers [1]-[4] who used those models to study the influence of the most relevant input parameters on the output performance.

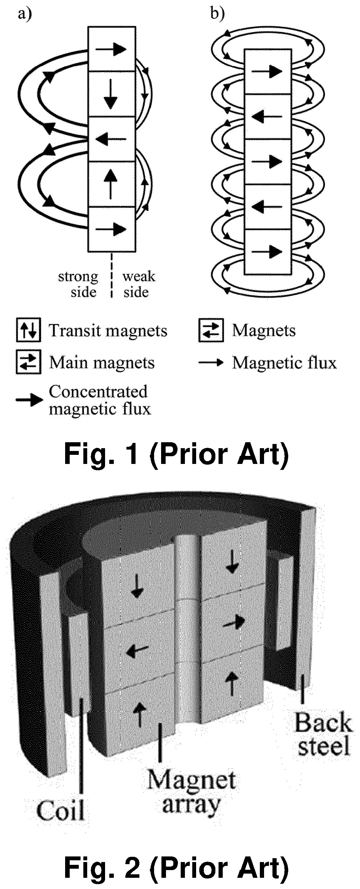

According to their general configuration, Spreemann and Manoli [5] classified different EMVEH into two main groups: "Magnet in-line coil" and "Magnet across coil" whenever the center axis of the magnet and the coil are congruent and orthogonal to the oscillation direction, respectively. In any case, the majority of the proposed designs found in the literature use a common configuration with one, two, or four linear or cylindrical magnets as the basis of their proposal [6]-[9]. In contrast, very few research has been conducted with cylindrical Halbach magnet array configurations. This type of configurations is based on a special arrangement of permanent magnets that concentrates the magnetic field on one side of the array while attenuating the field on the other side. Fig. 1 shows the rotating pattern of magnetization that allows for the concentration of the magnetic field, based on main magnets, with horizontal polarization, and transit magnets, with vertical polarization [10]. The direction of the arrows specifies the polarity of the magnets from south to north. Besides concentrating the magnetic field in the coil, other relevant advantages of this type of configurations is to decrease the overall dimensions by eliminating the use of magnetic shields and to improve the transduction factor in small locations [11].

Shahosseini and Najafi [12] compared different types of electromagnetic transducers against a single-cylindrical and a double-concentric Halbach magnet array with the main focus on increasing the electrical output power generation in the case of low-amplitude and low-frequency vibrations. Various simulations were performed with each configuration and different experimental tests were carried out to all models on direct-force energy harvester prototypes, demonstrating that the best performance is provided by the optimized double-concentric device with a corresponding normalized power density (NPD) of 26 mW/cm$^3$g$^2$. However, the mechanical subsystem of these prototypes with a proper resonant system has not been considered in their tests. Qiu et al. [13] presented a multi-directional EMVEH using a cylindrical Halbach magnet array. The experimental results show that the device could generate a considerable amount of electrical output power in all vibrating directions, with a maximum value of 9.32 mW obtained from the vertical axis vibration with an acceleration amplitude and an excitation frequency of 0.5 g and 15.40 Hz, respectively, demonstrating that a harvester with a Halbach array can work with vibration in multiple directions, breaking through the limitation of normal magnet configurations. Nico et al. [14] proposed a two-degree-of-freedom (2DOF) nonlinear velocity-amplified energy harvester with a stack of five magnets with Halbach configuration. The harvester comprises two masses that oscillate one inside the other between four sets of magnetic springs, increasing the frequency bandwidth in which the harvester performs efficiently. The experimental laboratory tests of this low-frequency device with an overall volume of 13.22 cm$^3$ were carried out to demonstrate the capability of this EMVEH design. It was found that it generates a maximum electrical output power of 5 mW for an acceleration and excitation frequency of 0.6 g and 10.5 Hz, respectively.

Beeby et al. [15] presents a small (component volume 0.1 cm$^3$, practical volume 0.15 cm$^3$) electromagnetic generator utilizing discrete components and optimized for a low ambient vibration level based upon real application data.

The generator uses four magnets arranged on an etched cantilever with a wound coil located within the moving magnetic field. Magnet size and coil properties were optimized, with the final device producing 46 $\mu$W for a resistive load of 4 k$\Omega$ from just 0.06 g acceleration levels at its resonant frequency of 52 Hz. A voltage of 428 mV was obtained from the generator with a 2300 turn coil which has proved sufficient for subsequent rectification and voltage step-up circuitry. The generator delivers 30% of the power supplied from the environment to useful electrical power in the load. This generator compares very favorably with other demonstrated examples in the literature, both in terms of normalized power density and efficiency.

Ya.Ş, ar et al. [16] presented an optimization study for a miniature electromagnetic energy harvester, by incorporating a non-magnetic inertial mass (tungsten) along with the axially oriented moving magnets. The aim was to decrease the operation frequency and increase the output power of the harvester with the usage of higher density material and larger magnetic flux density. Dimensions of the magnets are optimized according to the harvester dimensions and magnetic flux gradients. Additionally, the coil length, width, resistance, and position were optimized through finite element analysis and the resulting optimized model was experimentally validated. It was found that the operation frequency of the harvester decreases with the addition of inertial mass and axially oriented moving magnets, while the output power increases due to greater magnetic flux contributions provided by repulsive forces.

Ren et al [17] proposed an electromagnetic vibration energy harvester using an optimized transducer. The harvester consists of a planar spring, an axially magnetized magnet assembly, a coil assembly and an outer casing. An analytical model is proposed to analyze and optimize the electromagnetic transducer and improve its energy harvesting performance.

In a preliminary work prior to the development of the present invention [10], four cylindrical "Magnet in-line coil" configurations with back steel, which include a typical single-magnet, a double-magnet array, and two proposed cylindrical Halbach arrays of three and five magnets, were analyzed using the finite element method and compared in terms of their magnetic flux linkage and transduction factor. The design that provided the best results was further analyzed with two different coil configurations to finally find out that the cylindrical Halbach array with three inner magnets and one-center coil shown in Fig. 2 presents the best performance, reaching a maximum NPD of 19.72 mW/cm$^3$g$^2$. These results demonstrate that an EMVEH with this electromagnetic transducer configuration (model A from now on) can harvest the kinetic energy from low amplitude vibrations with a good performance, being an interesting candidate for powering WSNs, even though it has only been pre-optimized. In any case, the EMVEH proposed by the present invention improves the performance of this previous model A by redesigning and optimizing it. The following Table I summarizes some of the parameters set for model A.

TABLE I
FIXED PARAMETERS FOR THE OVERALL REDESIGN OF MODEL A

| Parameters | |
| --- | --- |
| Coil material | Copper |
| Magnet material | NdFeB N52 |
| Transducer outer radius (mm) | 20 |
| Transducer height (mm) | 24 |
| Transducer volume ($V$) (cm$^3$) | 30.15 |
| Cross-sectional area of magnets (cm$^2$) | 4.8 |
| Cross-sectional area of coil (cm$^2$) | 0.6 |
| Maximum mass displacement ($x_{max}$) (mm) | 4 |
| Mechanical damping coefficient ($c_m$) (kg/s) | 0.25 |
| Air gap (mm) | 2 |
| Coil number of turns ($N$) | 2483 |
| Coil wire diameter (mm) | 0. 1 |
| Coil fill factor | 0.65 |

**References**

[1] C. B. Williams and R. B. Yates, "Analysis of a micro-electric generator for microsystems," Sens. Actuators A, Phys., vol. 52, pp. 8-11, 1996.

[2] S. Beeby and T. J. Kazmierski, Energy harvesting systems: Principles, modeling and applications, New York, USA, Springer, 2011.

[3] C. B. Williams et al., "Development of an electromagnetic micro-generator," in IEE Proc.-Circuits Devices Syst., vol. 148, no. 6, pp. 337-342, 2001.

[4] S. Beeby and T. O'Donnell, "Electromagnetic energy harvesting," in Energy harvesting technologies, Boston, Springer, 2009, pp. 129-161.

[5] D. Spreemann and Y. Manoli, Electromagnetic vibration energy harvesting devices: Architectures, design, modeling and optimization, vol. 35, Springer Series in Advanced Microelectronics, Dordrecht, Netherlands, Springer Netherlands, 2012.

[6] Y. Su, K. Zhang, and Q. Gong, "Theoretical and experimental study of an electromagnetic vibration energy harvester," Ferroelectrics, vol. 551, no. 1, pp. 60-73, Oct. 2019.

[7] B. L. Ooi and J. M. Gilbert, "Design of wideband vibration-based electromagnetic generator by means of dual-resonator," Sens. Actuators A, Phys., vol. 213, pp. 9-18, Jul. 2014.

[8] H. Liu et al., "An intermittent self-powered energy harvesting system from low-frequency hand shaking," IEEE Sens. J., vol. 15, no. 9, pp. 4782-4790, Sep. 2015.

[9] S. Bradai, S. Naifar, C. Viehweger, and O. Kanoun, "Electromagnetic vibration energy harvesting for railway applications," in MATEC Web of Conferences, 2018, p. 12004.

[10] V. Ordoñez, R. Arcos, J. Romeu, and S. Reina, "Analysis of different cylindrical magnet and coil configurations for electromagnetic vibration energy harvesters," presented at the 1st Int. Conf. in Mechanical Engineering Trends, Quito, Ecuador, Mar. 24-26, 2021.

[11] D. Zhu, S. Beeby, J. Tudor, and N. Harris, "Vibration energy harvesting using the Halbach array," Smart Mater. Struct., vol. 21, no. 7, p. 075020, Jun. 2012.

[12] I. Shahosseini and K. Najafi, "Cylindrical Halbach magnet array for electromagnetic vibration energy harvesters," in 28th IEEE International Conference on MEMS, 2015, pp. 1051-1054.

[13] J. Qiu et al., "Multi-directional electromagnetic vibration energy harvester using circular Halbach array," AIP Advances, vol. 7, no. 5, p. 056672, Mar. 2017.

[14] V. Nico, R. Frizzell, and J. Punch, "The Identification of Period-Doubling in a Nonlinear Two-Degree-of-Freedom Electromagnetic Vibrational Energy Harvester," IEEE/ASME Trans. Mechatronics, vol. 25, no. 6, pp. 2973-2980, Jun. 2020.

[15] S. P. Beeby et al., "A micro electromagnetic generator for vibration energy harvesting," J. Micromech. Microeng., vol. 17, no. 7, p. 1257, Jun. 2007.

[16] O. Yaş ar et al., "Optimization of AA-battery sized electromagnetic energy harvesters: Reducing the resonance frequency using a non-magnetic inertial mass," IEEE Sens. J., vol. 18, no. 11, pp. 4509-4516, Jun. 2018.

[17] L. Ren et al., "Design, optimization and test of an electromagnetic vibration energy harvester for industrial wireless sensor networks," Int. J. Appl. Electromagn. Mech., vol. 51, no. 1, pp. 11-19, Apr. 2016.

Description of the Invention

The object of the present invention is thus to provide an improved high-performance EMVEH. This object is fulfilled by a device with the characteristics of claim 1.

To that end, embodiments of the present invention propose an EMVEH comprising an electromagnetic transducer that includes a coil which is disposed in the interior space of the electromagnetic transducer and centered along the central axis thereof, and a magnetic assembly concentrically disposed surrounding the coil and including a plurality of magnets forming a Halbach array to concentrate a magnetic field in the interior space of the electromagnetic transducer. Likewise, the proposed EMVEH also comprises a resonant assembly configured to oscillate in the same direction of the central axis and at a given resonance frequency.

According to the invention, the magnetic assembly can comprise three or more magnets in order to generate the desired Halbach magnet effect.

In an embodiment, the plurality of magnets are assembled in a cylindrical structure. In other embodiments the magnets can have different geometrical configurations such as rectangular or triangular shapes.

In an embodiment, the magnetic assembly comprises a main magnet and two transit magnets, the main magnet being a radially magnetized ring with its polarization going south to north from an outer to an inner face of the ring and the two transit magnets being axially magnetized and mounted in the magnetic assembly in a repelling position.

In other embodiments, the same Halbach magnet effect is obtained each time the current polarization of the magnets is rotated 90 degrees.

In an embodiment, the height of the main and transit magnets range from 4 to 20mm and 10 to 2 mm, respectively.

In an embodiment, the coil is wound around the center of a bobbin. It should be noted that in other embodiments the coil can be wounded above or below the center (or middle region) of the bobbin.

In an embodiment, the resonant assembly comprises two helical compression springs.

In a particular embodiment, the two helical compression springs have an inner diameter of about 27.5 mm and an outer diameter of about 31.5 mm. In this case, the proposed EMVEH further comprises a magnet holder configured to hold the magnetic assembly.

In some embodiments, the two helical compression springs have an inner diameter comprised in a range between 25.5 mm and 29.5 mm and an outer diameter comprised in a range between 29.5 mm and 33.5 mm.

In other embodiments, the two helical compression springs can be replaced for any elastic element or any other type of spring, for example, flat springs, membranes, extensions springs, etc. Also, only one superior or inferior spring could be used instead of both springs.

In an embodiment, the proposed EMVEH also includes a casing to accommodate the bobbin with the coil, the magnet holder, the magnetic assembly, and the resonant assembly.

The proposed optimized solution in some embodiments provides a normalized power density performance almost 450% larger than its previous non-optimized version (i.e. model A), which is based on three inner magnets in a Halbach array configuration and one-center coil. Also, its performance is found to be among the best in comparison to other devices presented in the state-of-the-art. From these results, two important conclusions can be stated. On the one hand, the proposed modifications have a major impact on the harvester's performance, and this fact can be assured given that a fair comparison has been done: the same materials properties, volume of the transducer mechanism, and the total cross-sectional area of the magnets, among other variables, have been applied. On the other hand, the proposed optimized device has been found to be a good candidate for powering wireless sensor networks.

Moreover, it was found that the experimental results from a fabricated prototype of the proposed device were in good agreement to its corresponding simulations, validating the proposed modeling strategy for the simulation of the output response of different single-degree-of-freedom electromagnetic harvesters based on cylindrical Halbach arrays. Also, the proposed EMVEH reduces significantly the undesired magnetic attraction with other surrounding systems since the magnetic flux is mainly concentrated in the interior of the device.

Brief Description of the Drawings

The previous and other advantages and features will be more fully understood from the following detailed description of embodiments, with reference to the attached figures, which must be considered in an illustrative and non-limiting manner, in which:

Fig. 1. illustrates a) a Halbach magnet array and b) a normal magnet array.

Fig. 2 is a cross-sectional view of model A disclosing a cylindrical Halbach array with three inner magnets, one center coil and a black steel.

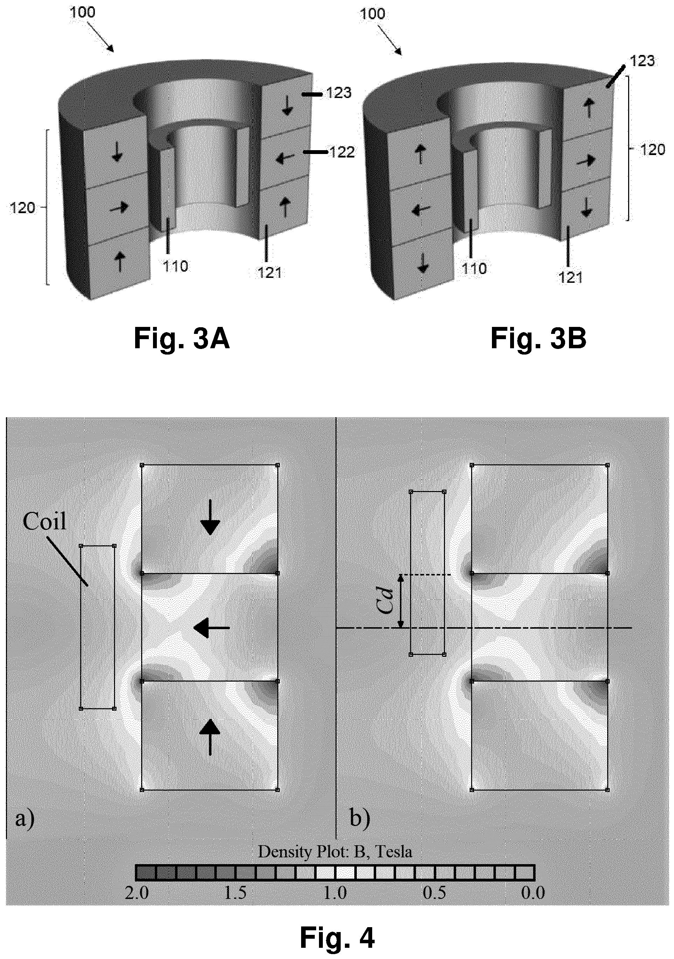

Figs. 3A and 3B are cross-sectional views of the electromagnetic transducer of the proposed EMVEH, according to different embodiments. Fig. 3A illustrates a cylindrical Halbach array with three outer magnets and one-center coil. The direction of each arrow specifies the polarity of the magnets from south to north. The magnetic field of the magnets is concentrated in the interior part of the transducer mechanism, where the coil is located. In Fig. 3B the direction of each arrow specifies the polarity of the magnets from south to north, which have been rotated 180 degrees in comparison to those of Fig. 3A. The magnetic field of the magnets is still concentrated in the interior part of the transducer mechanism, where the coil is located.

Fig. 4. a) 2D view of the axisymmetric FEM simulation of the magnetic flux density for the electromagnetic transducer of the proposed EMVEH and b) schematic representation of the coil distance to the center-line $d_c$. The distance $d_c$ could also have values different from zero in accordance with the geometrical boundaries of the device. The main and transit magnets can also have different dimensions (height and width) in accordance with the geometrical boundaries of the device.

Fig. 5. is a graph showing the coupled optimization of the main and transit magnets height and $d_c$.

Fig. 6. illustrates the schematics of another example of the proposed EMVEH: a) Fixture of the coil-bobbin to the casing, b) integration of the holder, magnets and helicoidal compression springs, and c) complete assembly.

Fig. 7 Experimental (solid line) and theoretical (dashed line) transmissibility curve of a particular embodiment of the proposed EMVEH obtained for an excitation amplitude of 0.15 g.

Fig. 8 Experimental (solid line) and simulated (dashed line) RMS induced voltage of a particular embodiment of the proposed EMVEH obtained for an excitation amplitude of 0.15 g.

Detailed Description of Preferred Embodiments

Present invention provides an EMVEH that comprises an electromagnetic transducer 100 and a resonant assembly 130. The electromagnetic transducer 100 (see Figs. 3A and 3B) includes a coil 110 that is disposed in the interior space of the electromagnetic transducer 100 and centered along the central axis thereof and a magnetic assembly 120 concentrically disposed surrounding the coil 110 and including three cylindrical magnets 121-123 forming a Halbach array to concentrate the magnetic field in the interior space of the electromagnetic transducer 100. The resonant assembly 130 is adapted to oscillate in the same direction of the central axis and at a given resonance frequency.

It should be noted that in other embodiments, not illustrated, the magnets 121-123 instead of being cylindrical can have a different shape, for instance a rectangular or triangular shape, among others. Likewise, the magnetic assembly 120 can include a higher number of magnets arranged in a Halbach array configuration in order to concentrate the magnetic field of the magnets in the interior of the electromagnetic transducer.

The resonant assembly 130 can be formed by one or more elastic members such as helical compression springs, flat springs, membranes, extensions springs, etc.

The redesign of model A illustrated in Fig. 2 is subjected to several initial fixed parameters established in Table I. The main goal is to improve the electrical output power without varying the properties of the materials, the volume of the transducer mechanism 100, and the total cross-sectional area of the magnetic assembly 120 and the coil 110. The generated electrical output power can be evaluated by

$$P_{out} = \frac{R_l}{(R_l + R_c)^2}\varepsilon^2 , \qquad (1)$$

in which $R_l$ and $R_c$ are the optimal load resistance and coil resistance, respectively, and $\varepsilon = k_t\dot{z}$ is the electromotive force (induced voltage), where $k_t$ is the transduction factor (also known as electromagnetic coupling factor), representing the change in coupled magnetic flux per unit of displacement, and z is the relative vibration velocity between the magnets 121-123 and the coil 110. According to (1), by decreasing the coil resistance and increasing the moving mass and transduction factor, the electrical output power of the device can be enhanced. For this aim, two main modifications are applied in the electromagnetic transducer 100. The first one is to eliminate the back steel of the device and replace the three inner magnets with three outer magnets 121-123 with a reversed direction of the Halbach array magnetic flux to concentrate the magnetic field in the interior space of the transducer 100, as illustrated in Figs. 3A and 3B. The second one is to fit the concentric coil 110 in the inner space where the magnetic flux is concentrated as shown in the simulation results provided by the Finite Element Method Magnetics (FEMM) software and presented in Fig. 4. By applying these modifications, the volume and mass of the magnets 121-123, which are the main part of the total moving mass of the device, have increased, while the volume and resistance of the coil 110 have decreased with respect to model A.

To pursue all FEMM simulations, one model for each analyzed configuration was created within the software. The meshes of these models, with a minimum angle constraint of 30°, were automatically created by the software using default parameters. Also, an open boundary condition was considered, and it was automatically modeled by the software using seven circular shells that emulate the impedance of the surrounding air. The optimization of the two remaining variables of the device, the coil distance to the horizontal center-line $d_c$ illustrated in Fig. 4b, and the height of the main

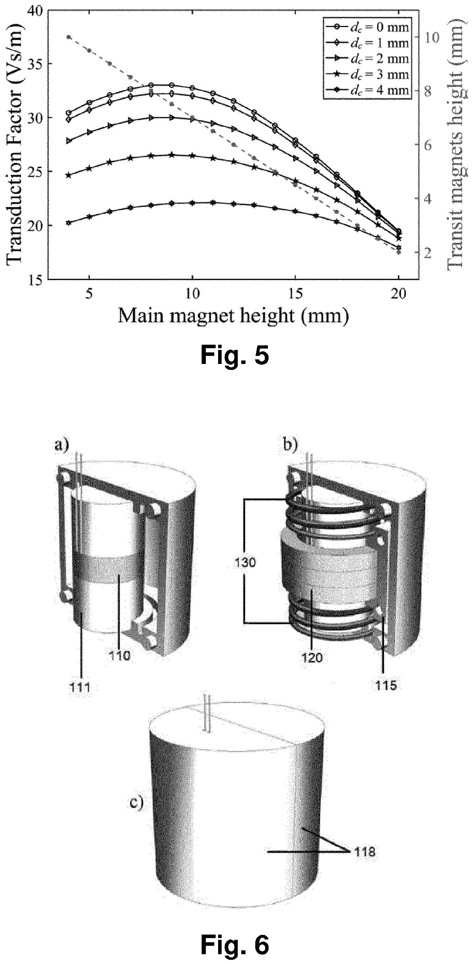

122 and transit 121, 123 magnets, has been performed to maximize the transduction factor. For this aim, the magnetic flux linkage as a function of the mass displacement of vibration was estimated with the FEMM software within the geometrical boundaries of these two variables. On the one hand, the coil distance to the horizontal center-line was assumed to be ranging between 0 and 4 mm. On the other hand, the height of the main 122 and transit 121, 123 magnets has been considered to take values from 4 to 20 mm and 10 to 2 mm, respectively. Results of the optimization process are shown in Fig. 5. In addition to the fixed parameters previously established in Table I, the final specifications of the electromagnetic transducer 100 (or model B) are presented in Table II in comparison to model A.

TABLE II
SPECIFICATIONS OF MODELS A AND B

| Parameters | Model A | Model B |
|---|---|---|
| Magnets inner radius (mm) | 2 | 10 |
| Magnets outer radius (mm) | 12 | 20 |
| Magnets individual height (mm) | 8 | 8 |
| Magnets mass (g) | 79.2 | 169.6 |
| Coil inner radius (mm) | 14 | 5.5 |
| Coil outer radius (mm) | 16.5 | 8 |
| Coil wire length (m) | 237.9 | 105.3 |
| Coil resistance ($R_c$) ($\Omega$) | 509 | 225 |
| Coil distance ($d_c$) (mm) | 0 | 0 |
| Back steel inner radius (mm) | 18.5 | N/A |
| Back steel outer radius (mm) | 20 | N/A |

With regard now to Fig. 6, therein a particular embodiment of the proposed EMVEH is shown. According to this embodiment, the EMVEH comprises a bobbin 111, the coil 110, three outer magnets, two helical compression springs 130, a magnet holder 115 and a casing 118. The two helical compression springs 130 of this particular embodiment has an inner diameter of 27.5 mm, an outer diameter of 31.5 mm, and a height of 10 mm. The normal mode analysis of the spring-mass-damper system has determined that the first mode of vibration corresponds to a SDOF mode in the vertical direction with a natural frequency of 59.3 Hz. The following table III summarizes some of the main parameters of the EMVEH of this embodiment (or model B1):

TABLE III
SPECIFICATIONS OF THE PROTOTYPE BASED ON MODEL B1

| Parameters | Model B1 |
|---|---|
| Magnets inner radius (mm) | 12.5 |
| Magnets outer radius (mm) | 17.5 |
| Magnets individual height (mm) | 5 |
| Coil inner radius (mm) | 6.5 |
| Coil outer radius (mm) | 11 |
| Coil wire length (m) | 151.2 |
| Coil resistance ($R_c$) ($\Omega$) | 339 |
| Coil number of turns ($N$) | 2750 |
| Coil wire diameter (mm) | 0.1 |
| Coil fill factor | 0.60 |
| Coil distance ($d_c$) (mm) | 0 |
| Coil material | Copper |
| Magnet material | NdFeB N45 |
| Spring material | AISI 310 |
| Structural component material | PA12 |
| Transducer outer radius (mm) | 17.5 |
| Transducer height (mm) | 15 |
| Transducer volume ($V$) (cm$^3$) | 14.43 |

(continued)

SPECIFICATIONS OF THE PROTOTYPE BASED ON MODEL B1

| Parameters | Model B1 |
| --- | --- |
| Maximum mass displacement ($x_{max}$) (mm) | 4 |
| Air gap (mm) | 1.5 |
| Total moving mass ($m$) (g) | 72.1 |
| Spring inner diameter (mm) | 27.5 |
| Spring outer diameter (mm) | 31.5 |
| Spring height (mm) | 10 |

In other embodiments, the two helical compression springs can have an inner diameter comprised in a range between 25.5 mm and 29.5 mm and an outer diameter comprised in a range between 29.5 mm and 33.5 mm, approximately.

An Experimental test setup was conducted to characterize the EMVEH of Fig. 6. The EMVEH was wax-fixed to a steel plate that was mounted onto a shaker. The shaker was driven by a power amplifier and a signal generator. Two PCB Piezotronics accelerometers with a frequency range of 0.5 to 10000 Hz and sensitivity of approximately 100 mV/g were magnetically fixed to the steel plate to provide a feedback control of the input acceleration, and one PCB Piezotronics miniature accelerometer with a frequency range of 2 to 10000 Hz and sensitivity of approximately 10 mV/g was wax-fixed to the resonant mass of the EMVEH to measure its response. Acceleration of vibration from those three accelerometers as well as the induced voltage at the EMVEH were acquired using the LMS SCADAS data acquisition system, considering a sampling frequency of 400 Hz. For the sake of reliability, each accelerometer was previously calibrated with an IMI handheld shaker.

Based on this experimental test setup, various measurements were conducted to characterize the mechanical transmissibility of the EMVEH and its induced voltage. Harmonic excitation was adopted for these tests. Specifically, measurements of 10 seconds for several excitation frequencies ranging between 10 and 100 Hz were carried out. No external electrical resistance (load resistance) was added to the circuit, which means that the measured induced voltage is obtained for an open circuit condition.

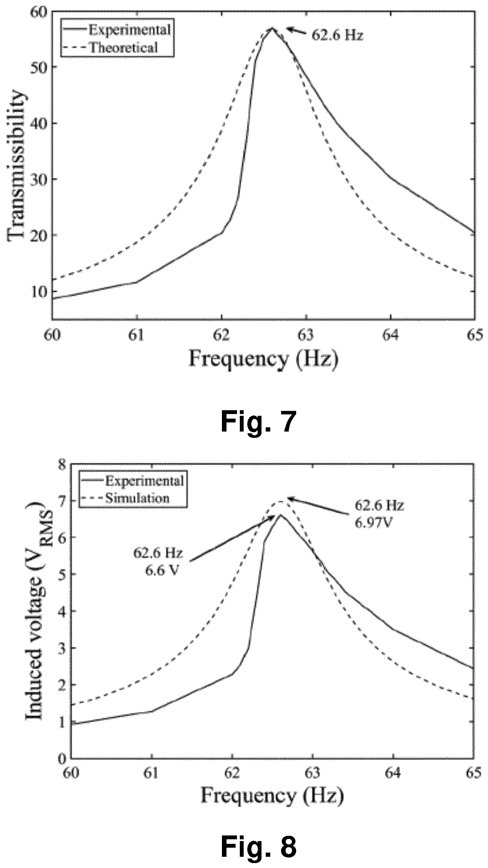

The experimental transmissibility curve of the EMVEH was found by estimating the transmissibility $T$ between the input and resonant mass vibrations, $\ddot{y}$ and $\ddot{x}$ respectively, where $\ddot{y}$ corresponds to the average values of the input accelerations measured with the first and second accelerometers, and $\ddot{x}$ corresponds to the oscillating mass (magnets and holder) acceleration measured with the third accelerometer. For this aim, harmonic excitation frequencies ranging between 10 and 100 Hz and a root-mean-square (RMS) acceleration of 0.15 g were considered. The transmissibility peak, illustrated in Fig. 7, allows for the determination of a total damping factor $\xi$ of 0.0089 which, for an open circuit operation, corresponds to the mechanical damping factor $\xi_m$, and it can be calculated using the expression

$$T_{\text{peak}} = \frac{\sqrt{4\xi^2 + 1}}{2\xi}. \qquad (2)$$

According to (3), the natural frequency $\omega_n$, of the resonant assembly 130 of the EMVEH can be also estimated from the total damping factor. For small total damping factors, the natural frequency corresponds to the frequency of peak transmissibility $\omega_{\text{peak}}$, which in this case takes a value of 62.6 Hz. When compared to the natural frequency of the first mode of vibration of the simulated normal mode analysis, a good agreement is observed. The variation of 3.3 Hz can be attributed to the slight imprecisions on the manufacturing processes, materials properties, and modelling details.

$$\omega_{\text{peak}} = \omega_n \frac{1}{2} \sqrt{\frac{\sqrt{8\xi^2 + 1} - 1}{\xi^2}}. \qquad (3)$$

Moreover, the experimental and simulated curves of the RMS induced voltage of the EMVEH for an RMS acceleration of 0.15 g are illustrated in Fig. 8 as a function of the excitation frequency in a range of 60 to 65 Hz. For the open circuit operation case, there is no energy conversion to the electrical domain. Thus, theoretically, no current flow is generated and the electrical damping factor $\xi_e$ can be neglected. For this reason, the simulated induced voltage has been estimated with a total damping factor of 0.0089 exclusively coming from the mechanical system. It can be observed from this figure that a simulated RMS induced voltage of 6.97 V occurs at the resonance frequency of 62.6 Hz, which corresponds to an error of 5.6% in comparison to the 6.6 V obtained from the experimental results of the EMVEH, demonstrating an acceptable accuracy of the simulation procedure adopted. Also, the non-symmetric shape of the experimental curve is found to be coming from a non-linear behavior induced by the magnetic coupling between the magnets, the springs, and the steel plate support.

Unless otherwise indicated, all numbers expressing measurements, conditions, and so forth used in the specification and claims are to be understood as being modified in all instances by the term "about". Accordingly, unless indicated to the contrary, the numerical parameters set forth in this specification and attached claims are approximations that can vary depending upon the desired properties sought to be obtained by the presently disclosed patient matter.

As used herein, the term "about", when referring to a value or to an amount of a length, width, mass, weight, temperature, time, volume, concentration, percentage, etc., is meant to encompass variations of in some embodiments $\pm 10\%$, in some embodiments $\pm 5\%$, in some embodiments $\pm 1\%$, in some embodiments $\pm 0.5\%$, and in some embodiments $\pm 0.1\%$ from the specified amount, as such variations are appropriate to perform the disclosed device.

The scope of the present invention is defined in the following set of claims.

## Claims

1. An electromagnetic vibration energy harvester, comprising:

   an electromagnetic transducer (100) including: a coil (110) which is disposed in an interior space of the electromagnetic transducer (100) and centered along a central axis, and a magnetic assembly (120) concentrically disposed surrounding the coil (110) and including a plurality of magnets (121, 122, 123) forming a Halbach array to concentrate a magnetic field in the interior space of the electromagnetic transducer (100); and
   a resonant assembly (130) configured to oscillate in a same direction of the central axis and at a given resonance frequency.

2. The electromagnetic vibration energy harvester of claim 1, wherein the magnetic assembly (120) comprises at least three magnets (121, 122, 123).

3. The electromagnetic vibration energy harvester of any one of the previous claims, wherein the plurality of magnets (121, 122, 123) comprise a cylindrical shape.

4. The electromagnetic vibration energy harvester of any one of the previous claims, wherein the magnetic assembly (120) comprises a main magnet (122) and two transit magnets (121, 123), the main magnet (122) being a radially magnetized ring with its polarization going south to north from an outer to an inner face of the ring and the two transit magnets (121, 123) being axially magnetized and mounted in the magnetic assembly in a repelling position.

5. The electromagnetic vibration energy harvester of claim 4, wherein a height of the main (122) and transit (121, 123) magnets range from 4 to 20mm and 10 to 2 mm, respectively.

6. The electromagnetic vibration energy harvester of any one of the previous claims, wherein the coil (110) is wound around a bobbin (111).

7. The electromagnetic vibration energy harvester of any one of the previous claims, wherein the resonant assembly (130) comprises two helical compression springs.

8. The electromagnetic vibration energy harvester of claim 7, wherein the two helical compression springs have an inner diameter comprised in a range between 25.5 mm and 29.5 mm and an outer diameter comprised in a range between 29.5 mm and 33.5 mm.

9. The electromagnetic vibration energy harvester of any one of claims 1 to 6, wherein the resonant assembly (130) comprises an elastic element including a flat spring, a membrane or an extensions spring.

10. The electromagnetic vibration energy harvester of any one claims 1 to 7, wherein the two helical compression springs have an inner diameter of about 27.5 mm and an outer diameter of about 31.5 mm, and wherein the electromagnetic vibration energy harvester (1) further comprises a magnet holder (115) configured to hold the magnetic assembly (120).

11. The electromagnetic vibration energy harvester of claim 10, further comprising a casing (118) configured to accommodate the bobbin (111)with the coil (110), the magnet holder (115), the magnetic assembly (120), and the resonant assembly (130).

a)

b)

strong | weak
side | side

[↑↓] Transit magnets    [⇄] Magnets

[⇄] Main magnets    → Magnetic flux

➡ Concentrated
magnetic flux

# Fig. 1 (Prior Art)

Back
steel

Coil     Magnet
array

# Fig. 2 (Prior Art)

100

123

122

120

110    121

**Fig. 3A**

100

123

120

110    121

**Fig. 3B**

Coil

Cd

a)    b)

Density Plot: B, Tesla

2.0        1.5        1.0        0.5        0.0

**Fig. 4**

Fig. 5

Fig. 6

**Fig. 7**

**Fig. 8**

Europäisches
Patentamt

European
Patent Office

Office européen
des brevets

# EUROPEAN SEARCH REPORT

Application Number

EP 21 38 2513

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | SHAHOSSEINI IMAN ET AL: "Cylindrical halbach magnet array for electromagnetic vibration energy harvesters", 2015 28TH IEEE INTERNATIONAL CONFERENCE ON MICRO ELECTRO MECHANICAL SYSTEMS (MEMS), IEEE, 18 January 2015 (2015-01-18), pages 1051-1054, XP032740985, DOI: 10.1109/MEMSYS.2015.7051143 [retrieved on 2015-02-26] | 1-4 | INV. H02K35/02 |
| Y | * page 1054, column 1; figures 1e,5b * | 6 | |
| Y | KR 2016 0135445 A (KRRI [KR]) 28 November 2016 (2016-11-28) * paragraphs [0037], [0039], [0063], [0064]; figures 4,5 * | 1-11 | |
| Y | KR 102 064 906 B1 (KRRI [KR]) 11 February 2020 (2020-02-11) * paragraph [28.59.60.61]; figure 3 * | 1-11 | |
| Y | KR 2020 0005296 A (UNIV KWANGWOON IND ACAD COLLAB [KR]) 15 January 2020 (2020-01-15) * paragraphs [0011], [0027], [0030], [0031]; figure 1 * | 1-4,6,7, 9 | TECHNICAL FIELDS SEARCHED (IPC)  H02K |
| Y | ORDOÑEZ VICTOR ET AL: "Analysis of different cylindrical magnet and coil configurations for electromagnetic vibration energy harvesters", PERIODICALS OF ENGINEERING AND NATURAL SCIENCES ORIGINAL RESEARCH, vol. 9, 2 June 2021 (2021-06-02), pages 1055-1063, XP055861736, ISSN: 2303-4521 * figure 2; tables 1,2 * | 1-11 | |

-/--

The present search report has been drawn up for all claims

| Place of search | Date of completion of the search | Examiner |
|---|---|---|
| The Hague | 16 November 2021 | Kovacsovics, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 21 38 2513

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2015/191045 A1 (UNIV MICHIGAN [US]) 17 December 2015 (2015-12-17) * paragraph [0066] - paragraph [0068]; figures 8,9 * ----- | 1-4,6,7, 9 | |
| A | WO 2020/260698 A1 (UNIV LIMERICK [IE]) 30 December 2020 (2020-12-30) * figure 8 * ----- | 7,9 | |

TECHNICAL FIELDS
SEARCHED        (IPC)

The present search report has been drawn up for all claims

| Place of search | Date of completion of the search | Examiner |
|---|---|---|
| The Hague | 16 November 2021 | Kovacsovics, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 38 2513

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2021

| Patent document cited in search report | | Publication date | Patent family member(s) | | Publication date |
|---|---|---|---|---|---|
| KR 20160135445 | A | 28-11-2016 | NONE | | |
| KR 102064906 | B1 | 11-02-2020 | NONE | | |
| KR 20200005296 | A | 15-01-2020 | NONE | | |
| WO 2015191045 | A1 | 17-12-2015 | US 2017126110 A1 | | 04-05-2017 |
| | | | WO 2015191045 A1 | | 17-12-2015 |
| WO 2020260698 | A1 | 30-12-2020 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **C. B. WILLIAMS ; R. B. YATES.** Analysis of a micro-electric generator for microsystems. *Sens. Actuators A, Phys.,* 1996, vol. 52, 8-11
- **S. BEEBY ; T. J. KAZMIERSKI.** Energy harvesting systems: Principles, modeling and applications. Springer, 2011
- **C. B. WILLIAMS et al.** Development of an electromagnetic micro-generator. *IEE Proc.-Circuits Devices Syst.,* 2001, vol. 148 (6), 337-342
- Electromagnetic energy harvesting. **S. BEEBY ; T. O'DONNELL.** Energy harvesting technologies. Springer, 2009, 129-161
- Electromagnetic vibration energy harvesting devices: Architectures, design, modeling and optimization. **D. SPREEMANN ; Y. MANOLI.** Springer Series in Advanced Microelectronics. Springer, 2012, vol. 35
- **Y. SU ; K. ZHANG ; Q. GONG.** Theoretical and experimental study of an electromagnetic vibration energy harvester. *Ferroelectrics,* October 2019, vol. 551 (1), 60-73
- **B. L. OOI ; J. M. GILBERT.** Design of wideband vibration-based electromagnetic generator by means of dual-resonator. *Sens. Actuators A, Phys.,* July 2014, vol. 213, 9-18
- **H. LIU et al.** An intermittent self-powered energy harvesting system from low-frequency hand shaking. *IEEE Sens. J.,* September 2015, vol. 15 (9), 4782-4790
- **S. BRADAI ; S. NAIFAR ; C. VIEHWEGER ; O. KANOUN.** Electromagnetic vibration energy harvesting for railway applications. *MATEC Web of Conferences,* 2018, 12004
- **V. ORDOÑEZ ; R. ARCOS ; J. ROMEU ; S. REINA.** Analysis of different cylindrical magnet and coil configurations for electromagnetic vibration energy harvesters. *1st Int. Conf. in Mechanical Engineering Trends,* 24 March 2021
- **D. ZHU ; S. BEEBY ; J. TUDOR ; N. HARRIS.** Vibration energy harvesting using the Halbach array. *Smart Mater. Struct.,* June 2012, vol. 21 (7), 075020
- **I. SHAHOSSEINI ; K. NAJAFI.** Cylindrical Halbach magnet array for electromagnetic vibration energy harvesters. *28th IEEE International Conference on MEMS,* 2015, 1051-1054
- **J. QIU et al.** Multi-directional electromagnetic vibration energy harvester using circular Halbach array. *AIP Advances,* March 2017, vol. 7 (5), 056672
- **V. NICO ; R. FRIZZELL ; J. PUNCH.** The Identification of Period-Doubling in a Nonlinear Two-Degree-of-Freedom Electromagnetic Vibrational Energy Harvester. *IEEE/ASME Trans. Mechatronics,* June 2020, vol. 25 (6), 2973-2980
- **S. P. BEEBY et al.** A micro electromagnetic generator for vibration energy harvesting. *J. Micromech. Microeng.,* June 2007, vol. 17 (7), 1257
- **L. REN et al.** Design, optimization and test of an electromagnetic vibration energy harvester for industrial wireless sensor networks. *Int. J. Appl. Electromagn. Mech.,* April 2016, vol. 51 (1), 11-19